# EUROPEAN PATENT SPECIFICATION

(11) **EP 4 349 728 B1**
(45) Date of publication and mention of the grant of the patent: **02.12.2026**
(21) Application number: 22810706.6
(22) Date of filing: 24.05.2022
(51) Int. Cl.: B65D 25/52, G01F 11/26, B65D 1/02, B65D 25/38, B65D 23/10

(54) **DOSING DEVICE FOR PACKAGED LIQUIDS**
DOSIERVORRICHTUNG FÜR VERPACKTE FLÜSSIGKEITEN
DISPOSITIF DOSEUR POUR DES LIQUIDES CONDITIONNÉS

(30) Priority: 28.05.2021 ES 202130484
(43) Date of publication of application: 10.04.2024
(73) Proprietor: Dosystem, S.l., 03008 Alicante (ES)
(72) Inventor: MARTINEZ GIMENO, Carlos Vicente, 03008 Alicante (ES)
(74) Representative: D'Agostini, Giovanni
(86) International application number: PCT/ES2022/070317
(87) International publication number: WO 2022/248754

(56) References cited:
- EP-A1- 1 970 322
- ES-A1- 2 597 179
- ES-A1- 2 597 179
- ES-A1- 2 698 200
- ES-U- 1 237 594
- ES-U- 1 250 269
- US-A- 4 015 758
- US-A- 5 029 736
- US-B1- 7 165 697
- US-B2- 9 315 293

## Description

The present invention comprises a hollow structure at an obtuse angle, formed by a straight cylinder and an oblique tank with respect to the axis of symmetry of the receiving container and said straight cylinder, joined by an irregular and diagonal intersection to form a dosing system that is introduced into the inside of the neck of the liquid containers after filling, enables them to measure their entire contents.

Therefore, this invention belongs to the sector of containers and bottles for liquids.

### BACKGROUND OF THE INVENTION

In the world of pharmacy, dietetics, manufacturers of alcoholic beverages, liquid detergents, fabric softeners, household cleaning products, chemical, pharmaceutical and spirit beverage industries... etc., due to their composition they must be consumed in specific fractions. established by physicians or experts.

Since 1898, hundreds of liquid dispensing devices and systems have been patented throughout the world that were not manufactured due to their complicated assembly in bottles and because their application and operation did not respond to the needs of the consumer or their cost was excessive for the bottler. The existence of an independent chamber between the outlet and the main tank of the container slows down its filling and complicates its industrial production. Most projects used various types of valves to separate the dose, an element that makes production more expensive and prevents its commercialization.

Currently, threaded plastic caps are used to dispense fluids that contain a concentric inner cylinder, used as a measure that the user must fill by hand to select a dose and then by hand pour it into its destination. This utensil imposes a cumbersome, unsafe and unhygienic way of use on the consumer.

### LIST OF SOME PATENTS OF DOSING SYSTEMS. - Source: OEPM

US 570759 a (A.A. LAW) 03-11-1896
US 2,091,929 (W. KAPPENBERG) 05-04-1937
US 2204104 A (GEORGE MASTERS) 11-06-1940
US 2828893 A (STEWART JAMES U et al.) 01-04-1958
US 3141579 to (MEDLOCK JOHN P) 21-07-1964
US 4079859 A (JENNING J THOMAS) 21-03-1978
US 4105142 A (MORRIS JR HAROLD K) 08-08-1978
DE 8531116U U1 19-12-1985
US 4646948 A (JENNING MASTERS) 21-03-1987
EP 0 436260 A1 (COLGATE PALMOLIVE) 10-07-1991
US 5,280,846 (BRUCE R. LONNECKER) 09.23.1992
US 2003/075460 A1 (SHAKI NECHAMA) 24-04-2003
ES 2597179 with application number ES 2015 00532 (THIS APPLICANT) 15/07/2015, discloses a dosing bottle comprising a reservoir and a smaller container located into the reservoir between it and an exit orifice of the bottle. The smaller container acts as a dispenser when the bottle is rotated for this purpose and keeps its contents controlled until the bottle is deliberately tilted to serve the dose, in which the dose is driven by a ramp with direct exit to the exterior.
ES 2650084 with application number ES 2017 00653 (THIS APPLICANT) 05/07/2017
ES1217570U (THIS APPLICANT) with application number ES201831194U 04/07/2017
ES 2698200 with application number ES 2017 700681 (THIS APPLICANT) 26/07/2017
ES2698200 (THIS APPLICANT) with application number ES201700681A 26/07/2017
ES1233919U with application number ES/UM201930714 (THIS APPLICANT) 06/05/2019
ES1250269U with application number ES/UM201930941 (THIS APPLICANT) 05/06/2019
ES1240144U with application number ES/UM101931864 (THIS APPLICANT) 12/11/2019

Patent application US 5 029 736 discloses a measuring cap for a container, in which the cap is adapted for mounting on container openings to supply controlled portion of the container contents such as powders and the like therefrom. The measuring cap includes a cup-like body including a primary measuring section for holding a portion of the container contents and a side wall including an inlet, and a secondary cap body including a top wall defining an outlet which communicates with the cup-like body through an outlet passage which is itself defined by a depending wall which separates the outlet passage from the inlet and defines a secondary measuring section adjacent to the inlet. In this manner, upon inversion of the container, a portion of its contents can enter the secondary measuring section through the inlet and upon subsequent return of the container to its normal upright position that portion of the container contents can enter the cup-like body whereupon with further inversion of the container the controlled portion of the container contents can exit through the outlet.

Patent application EP1970322 discloses a pouring device with a closable cap that can pour the content to the last, when pouring the content from a container. A pouring device body and a cap are obtained by integral molding, wherein the pouring device body comprises an inner tube part with a small diameter that can be inserted in the container as the container is opened, and having an opening on the tip end. The pouring device body further comprises an outer tube part with a large diameter, and having a pour opening and located outside the container. The inner tube part and outer tube part are connected to each other, and the cap is connected via a hinge in the vicinity of the pour opening of the outer tube part, enabling to close and reopen the pour opening. A hole is formed on the upper side of the periphery of the inner tube part corresponding to the opposite position in the circumferential direction of the hinge connecting part of the outer tube so that the liquid of the container can be poured to the last drop. A projection is provided at a level upper than the hole to keep the pouring device body stable by abutting from the inner surface side of the container to the wall surface of the container when opening the cap, to make the abutting surface of the lower end of the outer tube part with the container to be an inclined surface inclined at 10 - 45 degree.

Utility model application ES 1237594 discloses a liquid dispenser adaptable to the interior of containers in which the upper part of the container is fitted by means of perimeter edges located outside the skirt. The liquid dispenser comprises a concavity located concentric to it, in which the concavity has, in a transverse intermediate wall, a through hole. The liquid dispenser forms a single body with the container.

Patent application US 7 165 697 discloses a concentric two-compartment drinking vessel which includes an outer drinking vessel having a closed bottom section, a generally vertical sidewall section with an upper rim there around and an open top. Within the outer vessel an inner vessel is placed with sidewall section having an upper rim there around and an open top. The interior vessel sidewall section extends essentially diagonally from, at or near the outer vessel upper rim to a selected point adjacent the sidewall and bottom sections of the outer vessel. Liquids poured into the outer vessel and inner vessel are separately contained until the two-compartment vessel is tilted to drink. The liquid contained by the inner vessel flows from the two-compartment vessel prior to the liquid contained in the outer vessel flowing therefrom.

The European Regulation related to recycling, on which the circular economy is based, requires that caps must be attached to their containers to avoid the dispersion of plastic waste, an ordinance that prohibits the use of closing caps starting in June 2024. loose, such as current dosing caps that need to be independent of the container in order to be filled by hand with its liquid.

Due to this preventive Regulation, the solution for the sector is to provide the containers with a more economical dosing system integrated inside the containers that replaces the current and obsolete cap. Which will allow the use of captive caps to the container.

This applicant has designed and experimented with 3D prototypes of the present invention, the realization and integration of which inside the packaging does not influence the design or the brand image; Its cost, in its most basic preferred embodiment, is lower than what bottlers currently pay for the bulky dosing caps, which produce so much plastic waste.

### EXPLANATION OF THE INVENTION

Packaged Liquid Dosing Device, object of the invention, is made up of a straight cylinder, which is intersected irregularly and in a diagonal position, an oblique and watertight tank formed by four curved sides with rounded corners and a lateral through hole, which together They form a single body that is introduced and fixed - before filling - inside the necks of containers or bottles to enable them to dose all their liquid content.

The reason for its excellent dosing performance lies in the intersection of the longest side of the oblique tank, which, when starting at the inner edge of the upper mouth of the device, produces the following effects:
The diagonal position of said long side of the tank in the pouring position and therefore horizontal, advances the output of the selected dose in service, because said horizontal position, compared to the axis of symmetry of the container, advances it by tens of degrees.; Therefore, when the symmetry axis of the container does not reach the horizontal during the pouring inclination, the level of the liquid contained inside remains below the level of the selected dose as well as the lateral through hole of the oblique tank, which as reached the horizontal, the selected dose came out in its entirety by gravity, without it being necessary -we repeat- for said axis of symmetry of the container to reach said horizontal and therefore, the level of the remaining liquid contained in the container cannot rise to the lateral through hole of the device, which safeguards the dose in service, preventing it from being spoiled.

The angled structure of the invention in a single piece is the result of the irregular and diagonal intersection of its two elements, namely:
- a straight and hollow cylinder positioned vertically with an upper mouth that contains a perimeter fin for seating the container and another irregular lower mouth because a third of its perimeter is occupied by the intersection of the upper distal ends of the four sides of the oblique tank and the rest contains an arched cavity that facilitates the introduction of the device to the neck of the container; Said straight and hollow cylinder is the element that fits tightly and is in direct contact with the interior mouth of the container to be solidly and hermetically fixed to the neck of the container. This straight cylinder forms a single piece with,
- a hollow oblique tank with four rounded sides, curved corners and a watertight base that contains a lateral through hole located under the vertex of the obtuse angle formed by this tank with the straight cylinder; The longest side of the tank maintains an oblique or diagonal position along its entire length that intersects with the inside of the inner edge of the upper mouth of the straight cylinder and descends diagonally, maintaining its drift to the watertight base of the tank, this side being long, due to its place of intersection with said mouthpiece, the essential factor of the invention, together with the shorter diagonal facing side, provided with the through hole; The upper distal end of this short side contains the through hole and has its intersection with the lower mouth of the straight cylinder, coinciding with the location of the upper limit of said through hole, the only passage of the internal liquid towards the oblique reservoir, the mouth of the invention and therefore towards the mouth of the receiving container; The other two sides of the oblique tank, together with the two mentioned, make up its entire perimeter.

Using both elements in a single body, they configure an obtuse-angled structure that, when introduced and fixed to the neck of the receiving container, enables it to select and serve liquid doses in a safe and hygienic manner, by virtue of the deliberate strategic arrangement of its structural elements.

In a preferred embodiment, the straight and hollow cylinder contains in its upper mouth a perimeter fin that positions and stabilizes the invention inside the container neck, preventing it from sinking into it.

In a preferred embodiment, said straight and hollow cylinder contains, attached to the periphery of its upper mouth, another concentric cylinder with an internal thread as a means of threaded anchoring to the receiving container.

In a preferred embodiment, said straight and hollow cylinder contains, attached to the periphery of its upper mouth, a lid provided with a hinge made of the same plastic material that closes the device and the receiving container or vice versa.

In a preferred embodiment, the invention is anchored to the container through a perimeter slit or step, provided on the interior perimeter of the neck of the receiving container where the upper perimeter fin of the straight cylinder is introduced and fixed flush.

In a preferred embodiment, the dosing device, object of the invention, is equipped with a screw cap captive to the container or device, by means of a flange or segment that joins said cap to a perimeter seal anchoring to the neck of the container.

The main advantages of this invention are summarized as follows:
- Its manufacturing in a single lightweight piece, at low cost, is essential for its industrial application to be viable.
- Its association with the interior of the neck of the containers, the configuration and order of its elements, establish a system for selecting and dispensing calibrated and uniform doses.
- The interior location of the dosing device inside the container does not affect its design or its brand image.
- It replaces the unsafe maneuvers that consumers are currently forced to do to dose liquids using the cap as a measure and pouring the doses by hand, an unsafe procedure that causes spills and dirtiest hands and floors.
- It prevents liquid losses and guarantees hygiene because the dose is generated inside and is poured directly into its destination.
- Due to its simplicity and economy, it is suitable for equipping containers and bottles of widely consumed dosed liquids, such as detergents, insecticides, medicinal syrups... mouthwashes, personal care, and alcoholic beverages, etc.
- After pouring a dose, the dosing tank is ready for another service.
- This dosing device, object of the invention, adapts to all types of containers for liquids, whether glass, plastic or other material.
- Its installation in packaging reduces the consumption of plastic materials and waste.
- This invention satisfies users for its hygienic and comfortable use and manufacturers of dosable liquids because they have an innovative system that simplifies, replaces and solves the dosing of bottled liquids - at a lower cost - than that of the current dosing cap.
- Its global implementation in the containers of the bottling industries for liquids that are consumed in doses covers, in an economical way, the need experienced by millions of users who will be freed from the current cumbersome and mandatory maneuvers to obtain the doses.

The structure of the oblique tank selects and retains the selected liquid portion or dose until it is poured; The upper distal end of the longest side of the tank presents an intersection with the inner edge of the upper mouth of the straight cylinder and its diagonal position functions as an early exit channel for the dose, since at the inclination of the pouring of the same, the entire the whole length of the diagonal sides of the oblique tank reach the horizontal several tens of degrees before the axis of symmetry of the receiving container reaches it, which gives rise to the complete output of the calibrated dose without danger of being spoiled by its arrival at the lateral through hole, of the remaining liquid contained in the container. Therefore, the oblique position of two sides of the oblique tank and its intersections with the straight cylinder are the essential and basic factors that ensure correct functioning of the dosing device inserted inside the receiving container or bottle.

In a preferred embodiment, the oblique tank inserted in the neck of bottles to dispense liquids, object of the invention, is manufactured by thermo-injection and with a minimum thickness of plastic material; It can also be manufactured by blow molding or thermoforming.

The lateral through hole of the oblique tank is positioned at a height higher than the level of the liquid contained in the container - even in the first doses with the container overflowing - therefore, at the inclination of the dose pouring, the level of the internal liquid does not reach the through hole, thanks to the inclination of the diagonal sides of the tank, since when these diagonal sides reach the horizontal position, they pour by gravity the entire selected dose, at the same time, the through hole is raised to a level clearly higher than that of the level of the liquid contained, making unnecessary than the axis of symmetry of container reaches the horizontal, as can be seen in the figures, and the liquid contained in the container or bottle cannot reach such a prominent location of the through hole, unless, deliberately, you want to spoil the planned dose through inappropriate, forced or malicious.

Therefore, as the liquid contained in the receiving container is consumed, its level is reduced, a result that expands the safety margin produced by the difference between the diagonal of the oblique tank, the level of the liquid contained in the container and the position delayed, which in the pouring inclination, presents its axis of symmetry, a delayed position that guarantees the output of the complete and unpolluted dose.

In a preferred embodiment in which the invention is applied to containers or bottles provided with a grip handle very close to neck of container, which makes it difficult to enter the dosing device, the dosing device made of a material is manufactured and introduced into this container with a handle malleable such as rubber, silicone or latex, the longest and most essential long side of the oblique tank remaining with the same diagonal intersection of the invention, likewise the carrying short side of the lateral through hole remains diagonal and the base of Oblique tank is configured with a transverse volume that can be folded and once inserted it returns to its initial shape to size the preset dose.

This dosing device, object of the invention, sized according to the inner diameter of the neck of container or receiving bottle, it is adaptable to any model of liquid container.

The dosing device, object of the invention, installed after filling, in a container or bottle for liquids, establishes a dispensing system of calibrated doses from the moment it is introduced and fixed to the receiving container.

With the obtuse angle configuration of the elements of the invention, an efficient and economical dosing system is obtained thanks to its light structure.

In all embodiments, the introduction of the dosing device, object of the invention, into bottles or receiving containers, forms a single body with them.

Mode of use of the invention:
- The container is grabbed on its corresponding side and, checking that it is closed, the assembly is turned, overturned or tilted; At that moment you can hear the bubbling of the liquid entering the oblique tank through the through hole; When this bubbling stops, the reservoir is overflowing with liquid, the container returns to the vertical position and the dose is sized because the Excess liquid contained in the tank returns through the through hole to the interior of the container.
- Next, the cap or cap is unscrewed or unscrewed and the container is tilted to pour the entire calibrated dose into its destination.
- Once the service is finished, the mouth of the container is closed with its stopper or lid and it will be ready for a new service.

The efficient, essential and basic characteristic that this dosing device provides lies in the diagonal intersection of the upper distal end of the longer side, with the inner edge of the mouth of the straight cylinder, the shorter side, also opposite diagonal and its intersection with the base of the cylinder straight; strategic innovative discovery that allows you to advance the dose output by tens of degrees and advantage that makes it unnecessary for the axis of symmetry of the container to reach the horizontal and reach the lateral through hole, spoiling the dose in service; This limitation saves effort for the user who does not need to force the pouring tilt to dispense the dose.

The angled conformation of the container's reservoir, the derivation of its diagonal sides, one as a diagonal outlet channel and the other diagonal as a carrier of the through hole, the ease of selecting and serving doses, the attachment of the cap to the container or the lid that proposes; Its manufacturing economy, the hygiene in the service of the dosing system and the annual savings of millions of tons of plastic, achieved by this invention, demand its beneficial industrial application in every sense; Its industrial application replaces the current large measuring cap that is filled by hand through cumbersome and uncomfortable maneuvers, endured for many years by millions of consumers.

### BRIEF DESCRIPTION OF THE DRAWINGS

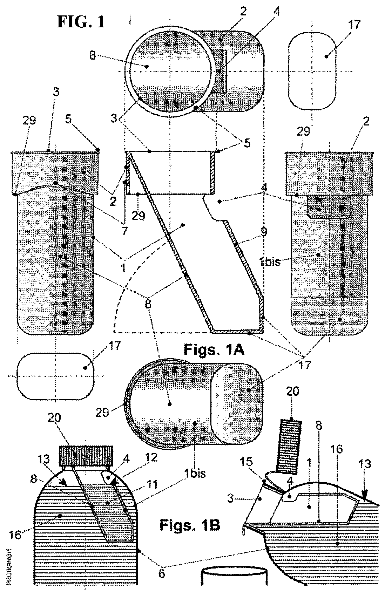

In order to complement the description and provide the best understanding of the characteristics of the invention, in accordance with several preferred examples of practical embodiment thereof, figures 1 to 6 are included as an integral part of said description, which represent, for illustrative and non-limiting purposes, the following:
Figures 1 show a possible embodiment of the dosing device, object of the invention, formed by two hollow bodies joined at an angle by means of a characteristic intersection, in accordance with the present invention. Figure 1 A shows respective orthogonal and section views of the device represented independently, and Figure 1 B shows respective section views of the device incorporated in the container in closed and use position.

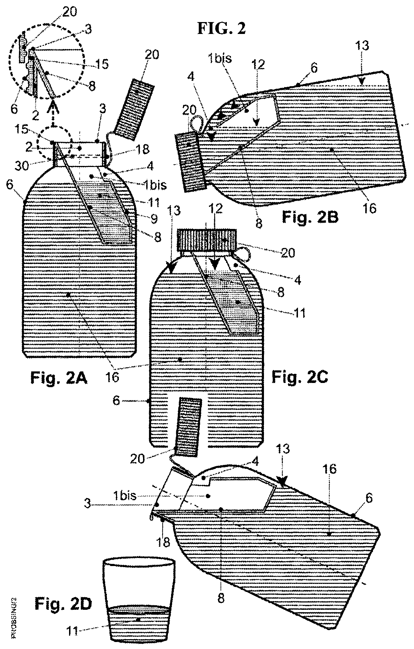

Figures 2 show detailed views of the oblique deposit inside the neck of the receiving container, according to the present invention. Figure 2A is a section view of the container in a vertical position with enlarged detail of the mouth, Figure 2B is a section view of the container in an inclined position to fill the device, Figure 2C is a section view of the container in position vertical once the device is filled, and Figure 2D is a sectional view of the container in the position of use to pour the dose of product.

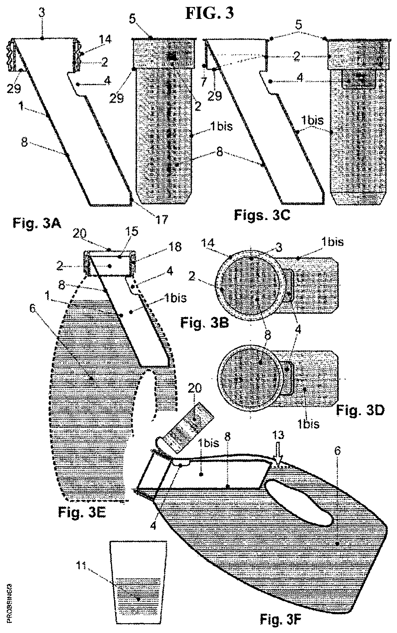

Figures 3 detail another possible embodiment of the dosing device whose upper cylinder, surrounded by another concentric peripheral cylinder with a lower thread, as a threaded means of fixing to the container, in accordance with the present invention. Figures 3A, 3B, 3C and 3D show respective elevation, section and plan views of the device independent of the container, and Figures 3E and 3F show respective section views of the device incorporated in the container, in vertical position and use respectively.

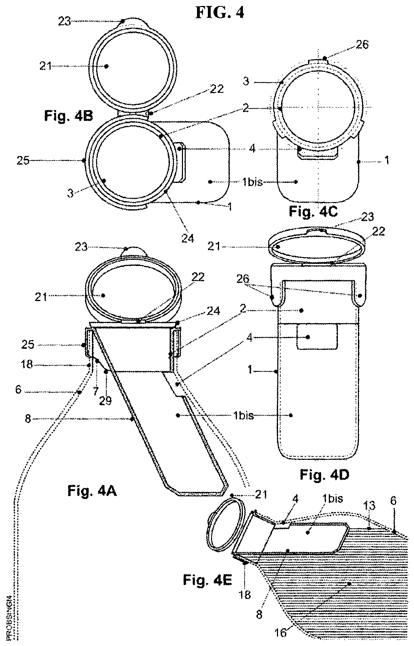

Figures 4 show views of the dosing device, in an embodiment with a lid captive by the hinge of the same plastic that joins it to the assembly, in accordance with the present invention. Figure 4A is a section view of the device incorporated in the container, Figures 4B, 4G and 4D are plan and elevation views of the device, and Figure 4E is a section view of the device in the container in an inclined position.

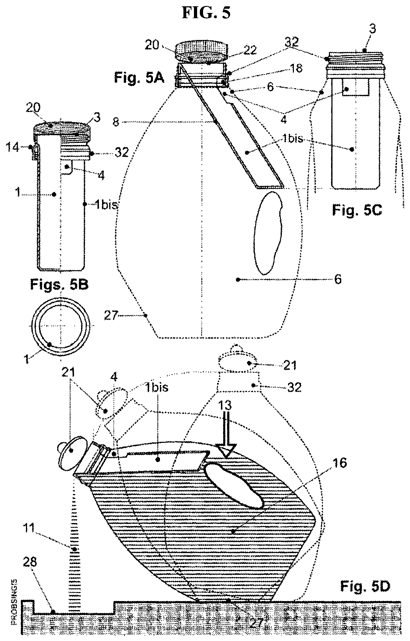

Figures 5 present a container with a handle, equipped with a possible embodiment according to the present invention. Figure 5A is a section view of the device incorporated in the container, Figures 5B and 5C are elevation and plan views of the device, and Figure 5D is a section view of the container with the device in different tilt positions.

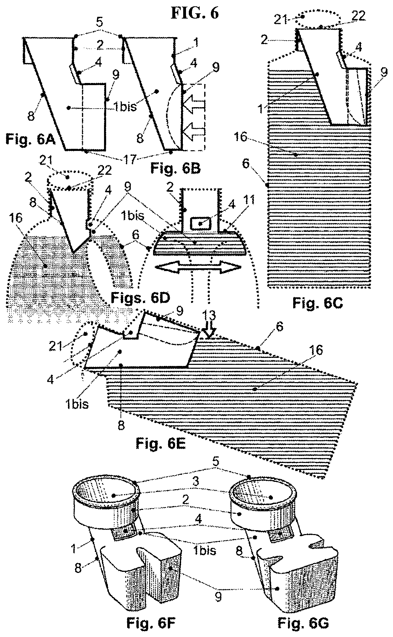

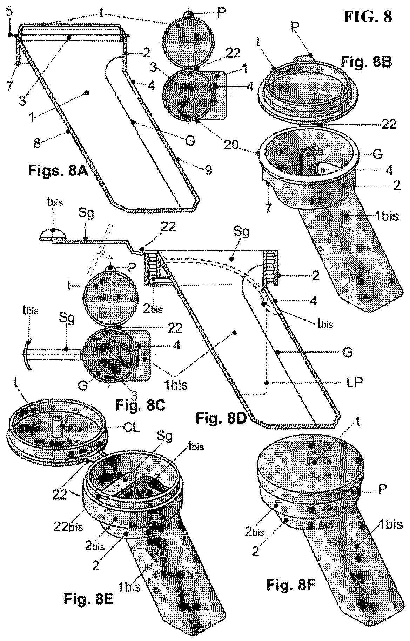

Figures 6 show two examples of containers with a handle and little interior space that makes it difficult to introduce the diagonal tank in its standard configuration; In these cases, the invention is manufactured by blowing and with a flexible material such as rubber or latex, which makes it possible to fold the oblique tank, introduce it and deploy it once inside the container, in accordance with the present invention. Figures 8A and 6B show section views of the device, Figure 6C shows a section view of the device incorporated in a first type of container, Figure 6D shows side and front section views of the device in another type of container, Figure 6E is a sectional view of the device in a container in an inclined position, and Figures 6F and 6G show perspective views of two examples of the shape of the device.

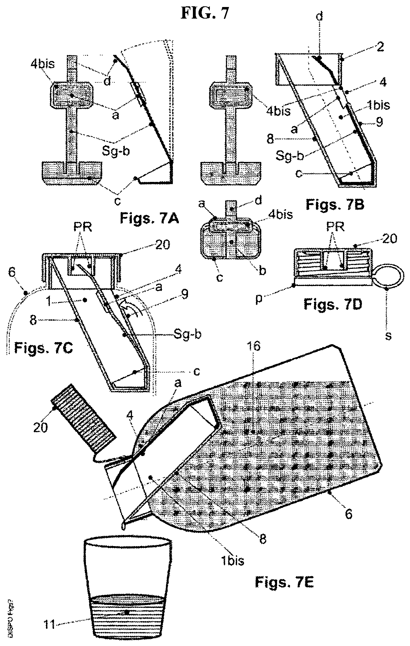

Figures 7 show an example of the device provided with the inner flexible segment for closing the through hole. Figure 7A shows front, side and plan elevation views of the flexible segment, Figure 7B shows a section view of the device with the flexible segment in closed position, Figure 7C shows a section view of the device incorporated in the container with the flexible segment in open position, Figure 7D shows a section view of the container cap with the inner extension pressing the end of the flexible segment, and Figure 7E shows a section view of the container tilted with the flexible segment closing the hole Of the device.
Figures 8 show another example of the device with a cover and flexible segment for closing the through hole attached to said cover and with an interior guide. Figure 8A is a section view of the device with interior guide with the lid closed, Figure 8B shows a perspective and plan view of the device with the lid open, Figures 8C and 8D show respective plan and section views of the device with the flexible segment attached to the lid in the deployed position, Figure 8E is a perspective view of the device shown in Figures 8G and 8D but with the flexible segment in the hole closing position and the lid open, and Figure 8f is a Perspective view of the device with the lid closed.

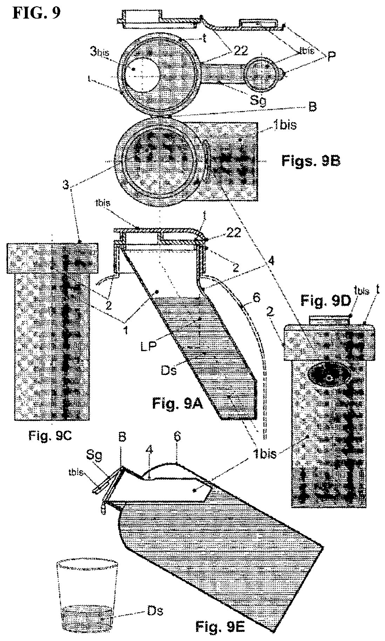

Figures 9 show another example of the device with a lid provided with a mouthpiece and secondary lid. Figure 9A is a section view of the device with the two lids closed, Figure 9B shows side and plan section views of the device lid in the open position, Figure 9C is an elevation view of the body of the device without the lid, Figure 9D is an elevation view of the device with the lid closed, and Figure 9E is a sectional view of the container with the device in an inclined position of use.

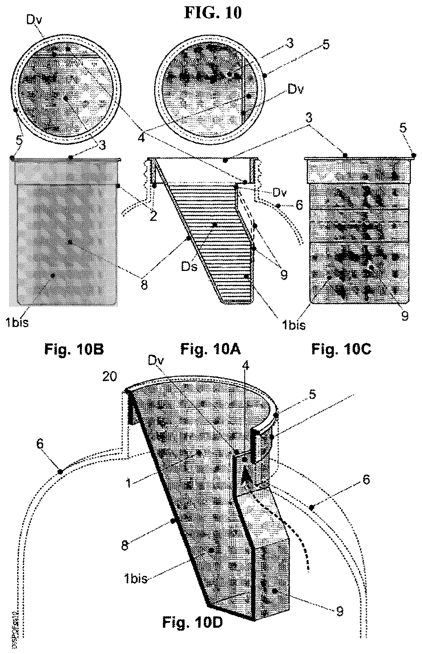

Figures 10 show another example of the device with an interior partition. Figure 10A is a section view of the device incorporated in the container, Figures 10B and 10C show elevation and plan views of the device, and Figure 10D is a perspective and section view of the device incorporated in the container, showing the arrangement of the interior partition (Dv).

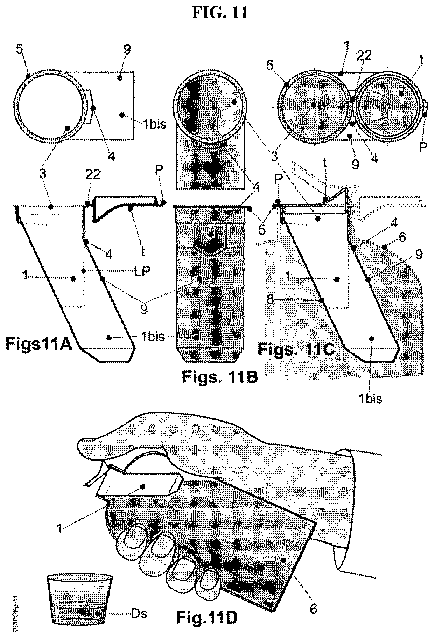

Figures 11 show another example of the device with a closing lid combined with it and the container (6). Figures 11 A and 11 B show orthogonal and section views of the device (1), Figure 11 C shows a section view of the device (1) incorporated into the container showing the different positions of the lid, and Figure 11 D shows a sectional view of the container in the position of use by a user.

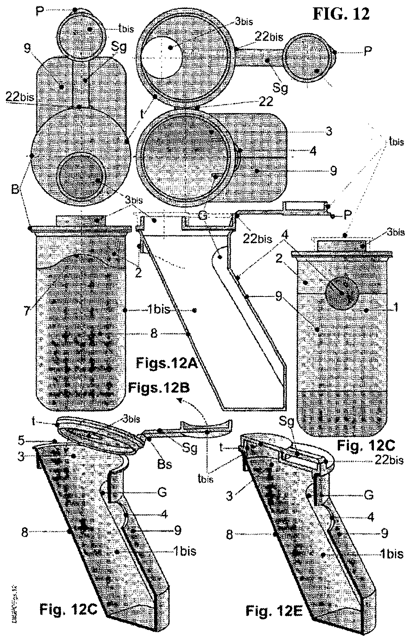

Figures 12 again show another example of the device with a lid provided with a secondary lid and guides (G). Figures 12A, 12B and 12C show orthogonal and section views of the device with the lid open and closed, Figures 12D and 12E show respective perspective and section views of the device with the lid open and closed.

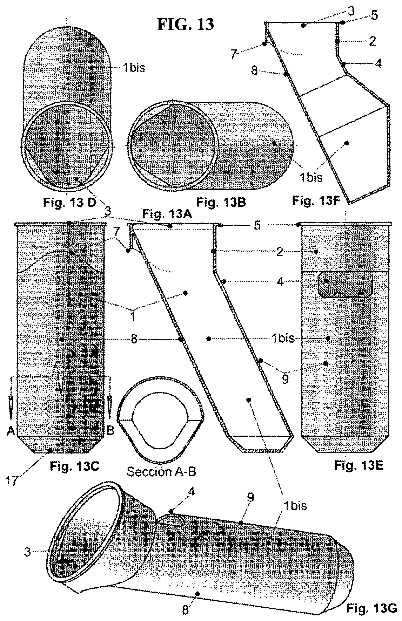

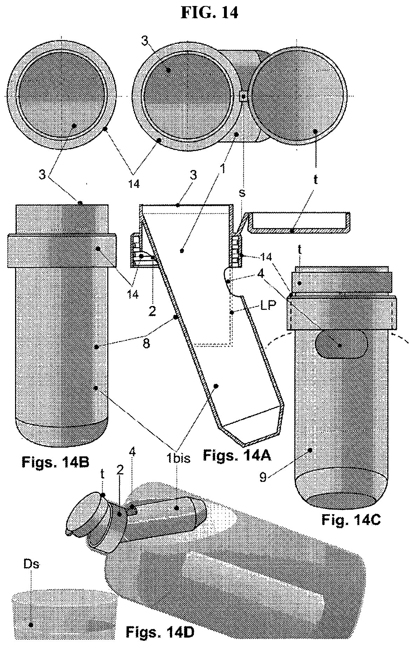

Figures 13 show another example of the device, in this case an example with narrowing of the upper mouth on the pouring side. Figure 13A shows a longitudinal section view of the device, Figures 13B, 13C, 13D and 13E show Elevation and cross-sectional plan views of the device shown in Figure 13A, Figure 13F shows a longitudinal section view of the device in a latex option with expanded capacity, and Figure 13G shows a perspective view of the device. example of the device shown in Figures 13A to 13E. Figures 14 show another example of the device with a threaded cylinder that fits into the container. Figures 14A and 14B show sectional, elevation and plan views of the device with the lid open, Figure 14C shows an elevation view of the device with the lid snapped closed, and Figure 14D is a perspective view of the built-in device. in the container in the position of use.

### PREFERRED EMBODIMENT OF THE INVENTION

In view of the aforementioned figures and in accordance with the numbering adopted, several examples of preferred embodiments of the invention can be seen, which include the parts and elements indicated and described below. Thus, as seen, Figures 1 to 14 illustrate possible preferred embodiments that detail the position and adaptation to the container (6) of the dosing device (1), object of the invention, composed of a straight cylinder (2) that extends diagonally through its lower mouth (29) with the oblique tank (1 bis) made up of four curved sides with rounded corners; In all preferred embodiments, two of its four sides are diagonal, the longest side (8) presents the intersection of its upper distal end with the inner edge of the upper mouth (3) and comprises the entire length of the dosing device (1 ); the short side (9), also diagonal and shorter, intersects with the cylinder (2) at its lower mouth (29), where the through hole (4) is located.

The invention essentially comprises the following elements united in a single body:
- a cylinder (2), open at its upper part generating an upper mouth (3), with an external diameter adjusted to the internal diameter of the neck (18) of the receiving container (6) in which it is introduced and fixed,
- a tank (1 bis) oblique with respect to the cylinder (2), closed at its lowest part and open at its upper part and connected to the upper mouth (3) of the cylinder (2),

where the deposit (1bis) includes
   - a long side (8) that forms an obtuse angle with respect to the axis of the cylinder (2) and that intersects at its upper distal end with the inner edge of the upper mouth (3) of the cylinder (2).
   - a short side (9) that forms an obtuse angle with respect to the axis of the cylinder (2) and that intersects with its upper distal end with the inner edge of the upper mouth (3) of the cylinder (2)
   - hole (4) located on the short side (9) near the upper mouth (3)
in such a way that it is possible to introduce a dose (11) of the packaged liquid into the tank (1 bis) through the hole (4) by tilting the closed container (6) above the horizontal, calibrate the dose (11) by placing the container in a vertical position and pour dose (11) contained in the tank (1bis) by tilting the open container (6) below the horizontal.

Optionally, the cylinder (2) has in approximately a third part of its lower mouth (29) an arc-shaped gap (7) located on the outer axis of said visible lower mouth (29) of said cylinder (2). which facilitates the introduction of the invention into the receiving container (6).

Optionally, the tank (1 bis) intersects with the inner edge of the upper mouth (3) of the cylinder (2).

In a preferred embodiment, shown in Figures 1A, the dosing device (1) formed by the cylinder (2) whose diagonal intersection with the tank (1bis) can be seen in lateral, front, upper, lower and longitudinal elevations and in longitudinal section. establishes a dosing system, object of the invention; The longer side (8) begins its downward and diagonal development, at its intersection with the inner edge of the upper mouth (3) of the cylinder (2), while the diagonal shorter side (9) begins its journey at its intersection with the base of the cylinder (2) to place the tank (1bis) in an oblique position. In these figures 1A, the oblique tank is designated with (1bis); with (2) to the cylinder that forms an obtuse angle with its intersection with said tank (1bis); (3) indicates the upper mouth of the cylinder (2); (4) identifies the through hole; the (5) upper seat fin in the upper mouth (3) of the cylinder (2); (6) reference to the receiving container or bottle; (7) distinguishes an arc-shaped gap that occupies a part of the perimeter of the lower mouth (29) of the cylinder (2) that facilitates the introduction of the device into the container; (11) identifies the selected dose; (12) indicates the level of the dose (11); (13) indicates the level reached by the liquid in the container; (15) indicates the first mouth of the receiving container; (16) indicates the liquid contained in the container; (17) identifies the base of the oblique tank (1bis); with (20) the threaded cap, held captive in the container by means of a flange or segment for this purpose, is identified; (29) indicates the lower mouth of the cylinder (2). Figures 1 B show a container in which the dosing device (1) has been inserted inside its neck (18) and is therefore capable of dosing its entire liquid content. All figures contain the adopted numbering.

In another preferred embodiment, shown in Figures 2/A, 2/B and 2C, two front elevations of the receiving container (6) are shown where the correct position of the invention and its operation are described. The fig. 2A, shows the container (6) equipped with a captive cap (20) and the position acquired by the cylinder (2) and the intersection of the oblique tank (1bis); (30) indicates a perimeter step, located inside the neck (18) of the container (6) where the perimeter fin (5) of the cylinder (2) fits to anchor; On this figure and in an intermittent line circle the arrival of the screwed cap (20) to the container (6), the intersection of the longest side (8) at the edge of the upper mouth (3) and the settling of the fin ( 5) on the cylinder (2) and the first mouth (15) of the container to achieve a tight seal between both elements. The fig. 2B shows the closed container with the cap (20) in an inclined position, selecting the dose (11), where (12) indicates the level reached by the dose (11); 13 indicates the level of the liquid (16) in the container (6); (8) identifies the diagonal and longest side of the oblique tank (I 1 bis); The through hole is marked with (4). Figure 2C shows the container (6) in an upright position to calibrate the dose (11) since in such position the excess liquid returns to the interior of the container (6) through the through hole (4); The fig. 2D presents the final moment of the pouring of the dose (11) and the horizontal position of the longest side (8) of the oblique tank (1bis) that pours the dose by gravity can be seen and it is also observed in this figure that the axis of symmetry of the container (6) does not need to reach the horizontal, a limitation that makes it difficult for the liquid to reach the through hole (4) located at a higher level that distances it from the level (13) of the liquid in the container (6), which ensures the integrity of the dose (11); All figures contain the adopted numbering.

In another preferred embodiment, Figures 3A, 3B and 3C describe the invention in side and front elevations and sections, where its elements and conformation can be seen at an obtuse angle; the fig. 3A is a section of the dosing device (1) that presents the cylinder (2) equipped with another threaded, concentric and peripheral second cylinder (14), used as a means of anchoring to the container (6); The fig. 3B represents a top or plan view of the invention, showing the through hole (4) and the added peripheral threaded second cylinder identified with (14); where the (8) is the longest side of the oblique tank (1 bis); above these two figures in fig. 3G shows two elevations and a section of the invention whose cylinder (2) is anchored to the container by pressure; To its side is the rear front elevation corresponding to another section that does not contain the threaded second cylinder (14) mentioned because its mode of anchoring to the container is by pressure; Next to this second section there is a rear front elevation where the location of the through hole (4) can be seen, under the cylinder (2). The fig. 3D defines in plan the invention in its standard embodiment whose mode of anchoring to the container (6) is by pressure inside its neck (18); Fig. 3E represents the container-invention assembly in a rest position and in Fig. 3F we see the position of the container after pouring the dose (11), indicating the internal level (13) reached in a container filled to the maximum with liquid, away from the through hole (4). All figures present the adopted numbering.

In another preferred embodiment shown in Figures 4, Figure 4A presents in close-up - so that it can be clearly seen - the position adopted by the elements of the dosing device (1) inside the container (6); the oblique tank (1bis) in intersection with the inner edge of the upper mouth (3), the cylinder (2) and the cover (21); with (25) another anchoring mode is indicated based on a concentric peripheral cylinder that surrounds the cylinder (2) that, by pressure, fixes the dosing device (1) to the container (6); with (21) the closing cover that closes the passage of liquid is indicated; (22) designates the injected first hinge of the same material as the invention; (23) indicates the opening handle of the cover (21); 24 indicates a special and protruding perimeter fin on the mouth of the container (6) where it is anchored to the cover (21); (8) designates the oblique longest side of the oblique tank (1bis); with (4) the through hole is indicated. The fig. 4B represents the invention in plan, in its embodiment of anchoring to the container (8) by means of a second cylinder (14) concentric and peripheral to the cylinder (2) where its elements with the adopted numbering can be clearly seen. The fig. 4C presents the same plan view as the previous one, but another anchoring system to the container is detailed, in this case through several vertical segments (26). The fig. 4D presents the front elevation of the invention, where the vertical segments (26) and the lid attached and captive by the first hinge (22) to the cylinder (2) are clearly visible. The fig. 4E shows a container (6) after having poured the dose (11) where the level (13) of the liquid inside said container (6) is displayed away from the through hole (4). All figures contain the adopted numbering.

In this preferred embodiment shown in Figures 5A, a container equipped with a handle can be seen, equipped with the dosing device (1), object of the invention; The oblique tank (1bis) is visible inside at its intersection with the cylinder (2) anchored to the neck (18) of the container (6); For its closure, said container (6) uses a common cap (20) linked to said container (6) by the flange or segment that joins it to a security seal of said cap (20). The length given to the oblique tank (1 bis) determines the size of the dose (11). Figure 5B shows the dosing device (1) in front and rear elevation with the through hole (4) that is anchored to the container by means of a truncated conical cylinder (32) integral and concentric to the cylinder (2) and threaded to receive the cap (20) prisoner; The base of the truncated conical third cylinder (32) adapts to the shape of the top of the receiving container (6), anchoring it in it through slits for this purpose. The fig. 5C presents the rear elevation of the invention where the truncated conical third cylinder (32), the prisoner cap (20), the through hole (4) and the upper mouth (3) of the cylinder (2) are displayed. Figure 5D shows the sequenced maneuvers to pour the dose (11) into a container (6) equipped with a truncated conical third cylinder (32), a cover (21) held captive to the container by its first hinge (22) that joins it to the cylinder (2). and it is clearly observed that the level (13) of the liquid in the container (6), even with the container overflowing, is maintained at a sufficient distance so that the dose (11) is not spoiled. All figures contain the adopted numbering.

In another preferred embodiment shown in Figures 6, the case of a container equipped with a handle that, due to its design or interior narrowness, requires, for its introduction into the container (6), that the dosing device (1) be manufactured with malleable material such as the silicone, latex, rubber etc. and present at their base (17) a transverse extension that sizes the preset dose; In this case, the essential factor of the invention is repeated, which is the intersection of the long side (8) at the lower edge of the upper mouth (3) thereof and the intersection of shorter side (9) with the lower mouth (29) of the cylinder (2), location of the through hole (4); The dosing device (1) is manufactured with a transverse volume at the base (17) of the oblique tank (1bis) in malleable material, which folds to be introduced and fixed to the container (6) with the planned dose (11). The figs. 6A shows in section the oblique tank (1bis) with its base (17) enlarged, and the diagonal longest side (8) maintains its intersection with the inner edge of the upper mouth (3). The fig. 8B shows the invention in the folded position to be introduced into the neck (18) of the container (6). The fig. 6C presents the container (6) equipped with the dosing device (1) inserted and deployed. The figs. 6D presents in front and side section a container (6) with a handle, where the cylinder (2) and the oblique tank (1bis) whose base (17) has been deployed transversely after its introduction into the container (6) are adapted. In fig. 6E shows the container (6) equipped with the invention and in an inclined pouring position and the oblique tank (1bis) deployed and adapted to container (8); Note that the long side (8) of tank (1 bis) maintains its entire length, with the same intersection and position as in its standard version; The figs. 6F and 6G present in perspective two preferred embodiments of the thousands of possible configurations that can be adopted of the dosing device (1), for cases in which there are difficulties in introducing them in their standard configuration to the container (6) with handle; The possibility of folding is appreciated, favored by the flexible material with which they are manufactured and the shapes adopted, gaps and folds that allow their folding and introduction into the container where they are deployed and once in position, they recover their initial shape that dimension and receives the planned dose (11) internally. All figures present the adopted numbering.

In another preferred embodiment of the device (1) of the invention shown in Figures 7, it includes inside a flexible segment (Sg-b) to close the through hole (4). The fig. 7A shows said flexible piece formed to be introduced inside the device (1) where it is indicated with (a) a rectangle whose angles are rounded and that fits into the through hole (4) to close it by means of a protruding rectangular shape surface (4bis) said rectangle is integral with the segment (Sg-b) whose lower distal end has shapes adaptable (c) to the base of the device (1). The fig. 7B shows the position that the piece, previously described, acquires inside the device (1) referenced with the same numbering. The fig. 7G shows a partial section of container (6) in which the fixation of device (1) equipped with the rectangles (a) and surface (4bis) that here appear separated from the hole (4) because the cylindrical interior extension, that is a fourth cylinder (PR) of the cap (20), presses the distal end (d) of the piece Figure 7D shows the front section of the cap (20) equipped with the fourth cylinder (PR) and where (s) is a flange that after the first opening of the cap (20) serves as a connecting link for said cap (20) and its seal (p). Fig. 7E describes the moment of pouring of the liquid contained in the device (1) and details the closure of the through hole (4) of the device (1), produced by the rectangle surface (4bis) which, when not pressed by the inner fourth cylinder (PR) of the cap (2), closes the passage of the liquid from the container through said hole (4).

In another preferred embodiment shown in Figures 8, another option for the interior segment to close the hole (4) is observed. Specifically, said figures show the dosing device (1) equipped with a lid (t) with a first hinge (22) formed in the mouth of said device (1). Fig. 8A is a section where the lid (t) can be seen closing the upper mouth (3); Fig. 8B presents in perspective the dosing device (1) with lid (t) and first hinge (22), all its components being marked with the adopted numbering, among which are some guides (G) and the through hole (4). Fig. 8G presents the device (1) in plan. Figs, 8D, show in section the dosing device equipped with a peripheral cylinder as a means of anchoring to the container (6). Fig. 8E show the device (1) equipped with segment (Sg) with the closing closure (tbis) closing the through hole (4). The fig. 8F shows the upper mouth (3) of the device (1) closed, where (P) is the opening tab.

In another preferred embodiment shown in Figures 9, the device (1) comprises a joint lid (t) that serves as a closure for both own device (1) as a container, which, in turn, includes a secondary closure (tbis). Taking into account Figure 9A, the device (1) inserted inside of neck of the container (6) closed by the lid (t); The figs. 9B presents the display of the closure elements in plan and section, with the adopted numbering. The figs. 9C is a front elevation of the invention. The fig. 9D shows the rear elevation to see the through hole (4), the lid (t) and the secondary-closure (tbis). The fig. 9E shows the moment of pouring that is achieved by placing the device (1) in a horizontal position, while the axis of symmetry of the container does not need to reach said horizontal position.

In another preferred embodiment shown in Figures 10, the device (1) comprises an interior partition (Dv). Taking into account Figure 10A, which shows a section of the device (1), it can be seen how its through hole (4) is located in this embodiment, horizontally formed by the partition (Dv) to prevent and make it difficult for the dose to be missed in service for the arrival of the liquid container. The fig. 10B presents elevation and plan of the device (1); the fig. It is an elevation opposite to the previous one and fig. 10D shows in perspective the characteristics and elements with the adopted numbering. In another preferred embodiment shown in Figures 11, the device (1) contains a joint lid (t) joined by a first hinge (22) for the purpose of pressurizing the upper mouth (3); It is worth highlighting in fig. 11Aque the reference (LP) marked with a dashed line indicates the initial preform that, subjected to PET stretch-blowing techniques, forms the final figure of the device (1): Fig. 11B shows rear elevation and plan of the dosing device (1). The fig. 11C shows the invention equipping a container (6) that contains a hinged lid as a closure of the assembly. Fig. 11 D shows the container in the pouring position as it is positioned horizontally and a flap provided for this purpose is pressed to open said lid. All elements present the adopted numbering.

In another preferred embodiment shown in Figures 12 of the device (1), again with a joint lid (t) provided with a secondary-closure (tbis). The figs. 11 A describe the device, object of the invention in section and front elevation and above these figure is represented in plan to detail the lid articulated by the first hinge (22) which in turn contains the closure or secondary-closure (tbis) to close the secondary mouthpiece (3bis) of said lid (t); In this embodiment, the existence of two longitudinal guides (G) inside the tank (1bis) on each side of the through hole (4) stands out, which in the case of the device being equipped with the rectangle surface (4bis) and its elements anchored that close said hole, these guides (G) lead said rectangle surface (4bis) to the correct closing position of the hole (4). The figs. 12C and 12 E, show in longitudinal sections the device (1) the opening of the upper mouth (3) and the closing of said mouthpiece, respectively, by means of the lid (t). All elements are referenced with the adopted numbering.

The dosing device (1) for packaged liquids can comprise a lid (t) with a second hinge (B) that closes the upper mouth (3) and that contains, in turn, a second mouth (3bis) and a segment (Sg) articulated by a third hinge (22bis) at whose end is distant it contains a second mobile closure (tbis) for closing said second mouth (3bis) that closes the passage of the liquid contained in the device (1), when the dosing device (1) or the container (6) does not have its first mouth (15) or upper mouth (3) closed respectively.

In another preferred embodiment shown in Figures 13, the device (1) has an upper mouth (3) that narrows on the pouring side to redirect and facilitate pouring. The fig. 13A shows the device (1) in longitudinal section. The fig. 13B describes it in plan. The fig. 13G is a front elevation of the device (1). The fig. 13D shows a plan elevation of the device (1). The fig. 13E, presents the device (1) in rear elevation where the through hole (4) can be seen. The fig. 13F, -above- is an embodiment made of latex or rubber that contains an extension of its capacity that folds for introduction into the receiving container (6). The fig. 13G presents the dosing device (1) in perspective. All its elements present the adopted numbering.

And, in another preferred embodiment of the device (1) shown in Figures 14, the attachment thereof to the container (6) is produced by means of a threaded second cylinder (14) peripheral and concentric to the upper mouth (3) that enables mounting by threading. to the container (6). The fig. 14A shows a longitudinal section of the device (1), equipped with a threaded second cylinder (14) for anchoring to the container. The fig. 14B is an elevation of the device (1) object of the invention. The fig. 14G shows the rear elevation with the through hole (4). The fig. 14D describes the moment in which the symmetry axis of the container (6) does not need to reach the horizontal because the device (1) at the inclination of the pour already reaches said horizontal and therefore the dose came out of it by gravity. All elements are referenced with the adopted numbering.

Having sufficiently described the nature of the present invention, as well as the way of putting it into practice, it is not considered necessary to make its explanation more extensive so that any expert in the field understands its scope and the advantages that derive from it.

## Claims

1. Dosing device (1) for packaged liquids suitable for being placed in a neck (18) of a container (6) with a first mouth of the container (15) containing a packaged liquid, comprising in a single structure:
• a straight cylinder (2), open at the top, generating an upper mouth (3), with an external diameter adjusted to the internal diameter of the neck (18) of the receiving container (6) in which it is introduced and fixed, the straight cylinder (2) being further provided with a lower mouth (29),
• a tank (1bis) oblique with respect to the straight cylinder (2), closed at its base and open at its top that remains connected to the upper mouth (3) of the straight cylinder (2),
**characterized in that** the tank (1bis) comprises
• a diagonal long side (8), which forms an obtuse angle with respect to the axis of the straight cylinder (2) and the axis of symmetry of the container (6) that intersects at its upper distal end with the inner edge of the upper mouth (3) of said straight cylinder (2),
• a short side (9) that intersects said upper distal end with the lower edge of the lower mouth (29) of the straight cylinder (2) and that forms an obtuse angle with respect to the axis of the straight cylinder (2) and the axis of symmetry of the container (6),
• a through hole (4) located in the upper part of the short side (9) next to the vertex of the obtuse angle formed by the straight cylinder (2) and the oblique tank (1 bis),
the hole (4) being intended for introduction of a dose (11) of the packaged liquid into the tank (1 bis) when the closed container (6) is in a titled position above the horizontal, the hole (4) being a calibrating hole for calibrating the dose (11) when the container (6) is in a vertical position and the pouring of the dose (11) contained in the tank (1bis) occurring when the open container (6) is in a tilted condition without the need for its axis of symmetry to reach the horizontal.

2. Dosing device (1) for packaged liquids, according to claim 1, **characterized in that** the straight cylinder (2) in its upper mouth (3) comprises a perimeter fin (5) that positions and stabilizes the dosing device (1) inside the neck (18) of container (6) preventing the dosing device (1) from sinking into the container (6).

3. Dosing device (1) for packaged liquids, according to claim 1, **characterized in that** it comprises a means for fixing the dosing device (1) and the neck (18) of the container (6) that comprises a second cylinder (14) concentric to the cylinder (2) with such a thread. so that it is possible to screw the dosing device (1) to a thread provided in the neck (18) of the container (6).

4. Dosing device (1) for packaged liquids, according to claim 1 and 2, **characterized in that** a fixing means is based on a perimeter slit (30) or step inside the neck (18) of the receiving container (6) that receives and fixes the fin (5) of the cylinder (2) flush.

5. Dosing device (1) for packaged liquids according to claim 3 **characterized in that** it comprises, as a means of closing the first mouth of the container (15), the threaded second cylinder (14) concentric to the straight cylinder (2) and a screw cap (20).

6. Dosing device (1) for packaged liquids according to claim 1 **characterized in that** it comprises, as a means of closing the first mouth of the container (15), a lid (t) attached to the periphery of its upper mouth (3) provided with a first hinge (22) of the same plastic material.

7. Dosing device (1) for packaged liquids according to any of the preceding claims, **characterized in that** it is made of a malleable material such as rubber or latex and has the longest side (8) of the device (1) with the same intersection and essential obliquity provided, as well as that of the opposite short side (9) and the base (17) of the tank (1 bis) is configured with a foldable transverse volume that once introduced returns to its initial shape to be able to size the preset dose.

8. Dosing device (1) for packaged liquids according to any of the preceding claims, **characterized in that** it comprises inside a flexible segment (Sg-b) that contains a surface (4bis) that acts as a closing cover for the through hole (4), the segment (Sg-b) acts by closing said through hole (4) when the upper mouth (3) is not closed and opens the hole (4) when a lid or plug of the container (6) presses said segment (Sg-B) when it exerts its function of closing the container (6).

9. Dosing device (1) for packaged liquids according to claim 8, **characterized in that** said segment (Sg) has an upper distal end (d) that is pressed by an internal extension (PR) of the lid or plug, producing the opening of the hole (4).

10. Dosing device (1) for packaged liquids according to claim 8, **characterized in that** the interior of the tank (1bis) includes one or two longitudinal guides (G) that guide the surface (4bis) towards the closure of the through hole (4).

11. Dosing device (1) for packaged liquids according to claim 6, **characterized in that** it comprises said lid (t) with a second hinge (B) that closes the upper mouth (3) and that contains, in turn, a second mouth (3bis) and a segment (Sg) articulated by a third hinge (22bis) at whose end is distant It contains a second mobile closure (tbis) for closing said second mouth (3bis) that closes the passage of the liquid contained in the device (1), when the dosing device (1) or the container (6) does not have its first mouth (15) or upper mouth (3) closed respectively.

12. Dosing device (1) for packaged liquids according to any of the previous claims, **characterized in that** it has a narrowing of the upper mouth (3) on the pouring side.

13. Dosing device (1) for packaged liquids according to any of the preceding claims, **characterized in that** the through hole (4) is formed by an interior partition (Dv) to prevent and make it difficult for the dose to be spoiled in service due to the arrival of liquid from the container.

## Patentansprüche

1. Dosiervorrichtung (1) für abgefüllte Flüssigkeiten, die zum Einsetzen in einen Hals (18) eines Behälters (6) geeignet ist, wobei eine erste Öffnung des Behälters (15) eine abgefüllte Flüssigkeit enthält, und die in einer einzigen Struktur Folgendes umfasst:
• einen geraden Zylinder (2), der oben offen ist und eine obere Öffnung (3) bildet, wobei sein Außendurchmesser an den Innendurchmesser des Halses (18) des Aufnahmebehälters (6) angepasst ist, in den er eingeführt und befestigt wird, wobei der gerade Zylinder (2) ferner mit einer unteren Öffnung (29) versehen ist,
• einen Tank (1bis), der in Bezug auf den geraden Zylinder (2) schräg, an seiner Basis geschlossen und an seiner Oberseite offen ist, der mit der oberen Öffnung (3) des geraden Zylinders (2) verbunden bleibt,
**gekennzeichnet dadurch, dass** der Tank (1bis) Folgendes umfasst:
• eine diagonale Längsseite (8), die einen stumpfen Winkel in Bezug auf die Achse des geraden Zylinders (2) und der Symmetrieachse des Behälters (6) bildet, die an ihrem oberen distalen Ende die Innenkante der oberen Öffnung (3) des geraden Zylinders (2) schneidet,
• eine kurze Seite (9), die das obere distale Ende mit der Unterkante der unteren Öffnung (29) des geraden Zylinders (2) schneidet und einen stumpfen Winkel in Bezug auf die Achse des geraden Zylinders (2) und die Symmetrieachse des Behälters (6) bildet,
• ein Durchgangsloch (4), das in dem oberen Teil der kurzen Seite (9) neben dem Scheitelpunkt des stumpfen Winkels angeordnet ist, der durch den geraden Zylinder (2) und den schrägen Tank (1 bis) gebildet wird,
wobei das Loch (4) zum Einleiten einer Dosis (11) der abgefüllten Flüssigkeit in den Tank (1 bis) bestimmt ist, wenn sich der geschlossene Behälter (6) in einer geneigten Position oberhalb der Horizontalen befindet, wobei das Loch (4) ein Kalibrierungsloch zum Kalibrieren der Dosis (11) ist, wenn sich der Behälter (6) in einer vertikalen Position befindet und das Eingießen der in dem Tank (1bis) enthaltenen Dosis (11) erfolgt, wenn sich der offene Behälter (6) in einem geneigten Zustand befindet, ohne dass seine Symmetrieachse die Horizontale erreichen muss.

2. Dosiervorrichtung (1) für abgefüllte Flüssigkeiten nach Anspruch 1, **gekennzeichnet dadurch, dass** der gerade Zylinder (2) in seiner oberen Öffnung (3) eine umlaufende Rippe (5) umfasst, die die Dosiervorrichtung (1) in dem Hals (18) des Behälters (6) positioniert und stabilisiert, so dass verhindert wird, dass die Dosiervorrichtung (1) in den Behälter (6) hineinrutscht.

3. Dosiervorrichtung (1) für abgefüllte Flüssigkeiten nach Anspruch 1, **gekennzeichnet dadurch, dass** sie ein Mittel zur Befestigung der Dosiervorrichtung (1) und des Halses (18) des Behälters (6) umfasst, das einen zweiten Zylinder (14), der konzentrisch zum Zylinder (2) ist, mit einem solchen Gewinde umfasst, dass es möglich ist, die Dosiervorrichtung (1) an ein in dem Hals (18) des Behälters (6) vorhergesehenes Gewinde zu schrauben.

4. Dosiervorrichtung (1) für abgefüllte Flüssigkeiten nach Anspruch 1 und 2, **gekennzeichnet dadurch, dass** ein Befestigungsmittel auf einem Umfangsschlitz (30) oder einer Stufe innerhalb des Halses (18) des Aufnahmebehälters (6) basiert, der die Rippe (5) des Zylinders (2) aufnimmt und bündig fixiert.

5. Dosiervorrichtung (1) für abgefüllte Flüssigkeiten nach Anspruch 3, **gekennzeichnet dadurch, dass** sie als Mittel zum Verschließen der ersten Öffnung des Behälters (15) den mit einem Gewinde versehenen zweiten Zylinder (14), der konzentrisch zu dem geraden Zylinder (2) ist, und eine Schraubkappe (20) umfasst.

6. Dosiervorrichtung (1) für abgefüllte Flüssigkeiten nach Anspruch 1, **gekennzeichnet dadurch, dass** sie als Mittel zum Verschließen der ersten Öffnung des Behälters (15) einen Deckel (t) umfasst, der an dem Rand seiner oberen Öffnung (3) befestigt ist und mit einem ersten Scharnier (22) aus demselben Kunststoffmaterial versehen ist.

7. Dosiervorrichtung (1) für abgefüllte Flüssigkeiten nach einem der vorhergehenden Ansprüche, **gekennzeichnet dadurch, dass** sie aus einem verformbaren Material wie Gummi oder Latex besteht und die längste Seite (8) der Vorrichtung (1) mit demselben Schnittpunkt und im Wesentlichen derselben Schräge wie die der gegenüberliegenden kurzen Seite (9) versehen ist, und der Boden (17) des Tanks (1 bis) mit einem faltbaren Quervolumen konfiguriert ist, das nach dem Einführen wieder in seine ursprüngliche Form zurückkehrt, um die voreingestellte Dosis bemessen zu können.

8. Dosiervorrichtung (1) für abgefüllte Flüssigkeiten nach einem der vorhergehenden Ansprüche, **gekennzeichnet dadurch, dass** sie im Inneren ein flexibles Segment (Sg-b) umfasst, das eine Oberfläche (4bis) enthält, die als Verschlussdeckel für das Durchgangsloch (4) dient, wobei das Segment (Sg-b) durch Schließen des Durchgangslochs (4) wirkt, wenn die obere Öffnung (3) nicht verschlossen ist, und das Loch (4) öffnet, wenn ein Deckel oder Stopfen des Behälters (6) auf das Segment (Sg-B) drückt, wenn es seine Funktion des Verschließens des Behälters (6) ausübt.

9. Dosiervorrichtung (1) für abgefüllte Flüssigkeiten nach Anspruch 8, **gekennzeichnet dadurch, dass** das Segment (Sg) ein oberes distales Ende (d) aufweist, das von einer internen Verlängerung (PR) des Deckels oder Stopfens gedrückt wird, wodurch die Öffnung des Lochs (4) bewirkt wird.

10. Dosiervorrichtung (1) für abgefüllte Flüssigkeiten nach Anspruch 8, **gekennzeichnet dadurch, dass** das Innere des Tanks (1bis) ein oder zwei Längsführungen (G) enthält, die die Oberfläche (4bis) in Richtung des Verschlusses des Durchgangslochs (4) führen.

11. Dosiervorrichtung (1) für abgefüllte Flüssigkeiten nach Anspruch 6, **gekennzeichnet dadurch, dass** sie den Deckel (t) mit einem zweiten Scharnier (B) umfasst, das die obere Öffnung (3) schließt und das wiederum eine zweite Öffnung (3bis) und ein Segment (Sg) enthält, das durch ein drittes Scharnier (22bis) artikuliert ist, an dessen entferntem Ende ein zweiter mobiler Verschluss (tbis) zum Verschließen der zweiten Öffnung (3bis) enthalten ist, der den Durchgang der in der Vorrichtung (1) enthaltenen Flüssigkeit verschließt, wenn die erste Öffnung (15) bzw. die obere Öffnung (3) der Dosiervorrichtung (1) oder des Behälters (6) nicht verschlossen ist.

12. Dosiervorrichtung (1) für abgefüllte Flüssigkeiten nach einem der vorhergehenden Ansprüche, **gekennzeichnet dadurch, dass** sie eine Verengung der oberen Öffnung (3) auf der Ausgießseite aufweist.

13. Dosiervorrichtung (1) für abgefüllte Flüssigkeiten nach einem der vorhergehenden Ansprüche, **gekennzeichnet dadurch, dass** das Durchgangsloch (4) durch eine innere Trennwand (Dv) gebildet wird, um zu verhindern und zu erschweren, dass die Dosis während des Gebrauchs durch das Eindringen von Flüssigkeit aus dem Behälter beeinträchtigt wird.

## Revendications

1. Dispositif de dosage (1) pour liquides conditionnés, adapté pour être placé dans un col (18) d'un récipient (6) présentant une première embouchure du récipient (15) contenant un liquide conditionné, comprenant en une seule structure :
• un cylindre droit (2), ouvert à sa partie supérieure, générant une embouchure supérieure (3), avec un diamètre externe ajusté au diamètre interne du col (18) du récipient récepteur (6) dans lequel il est introduit et fixé, le cylindre droit (2) étant en outre pourvu d'une embouchure inférieure (29),
• un réservoir (1bis) oblique par rapport au cylindre droit (2), fermé à sa base et ouvert à sa partie supérieure qui reste reliée à l'embouchure supérieure (3) du cylindre droit (2),
**caractérisé en ce que** le réservoir (1bis) comprend :
• un côté long diagonal (8), qui forme un angle obtus par rapport à l'axe du cylindre droit (2) et à l'axe de symétrie du récipient (6) qui coupe, au niveau de son extrémité distale supérieure, le bord interne de l'embouchure supérieure (3) dudit cylindre droit (2),
• un côté court (9) qui coupe ladite extrémité distale supérieure avec le bord inférieur de l'embouchure inférieure (29) du cylindre droit (2) et qui forme un angle obtus par rapport à l'axe du cylindre droit (2) et à l'axe de symétrie du récipient (6),
• un trou traversant (4) situé dans la partie supérieure du côté court (9) à proximité du sommet de l'angle obtus formé par le cylindre droit (2) et le réservoir oblique (1bis),
le trou (4) étant destiné à l'introduction d'une dose (11) du liquide conditionné dans le réservoir (1bis) lorsque le récipient (6) fermé se trouve dans une position inclinée au-dessus de l'horizontale, le trou (4) étant un trou de calibrage pour calibrer la dose (11) lorsque le récipient (6) est dans une position verticale, et le versement de la dose (11) contenue dans le réservoir (1bis) se produisant lorsque le récipient (6) ouvert est dans un état incliné sans qu'il soit nécessaire que son axe de symétrie atteigne l'horizontale.

2. Dispositif de dosage (1) pour liquides conditionnés, selon la revendication 1, **caractérisé en ce que** le cylindre droit (2) comprend, dans son embouchure supérieure (3), une ailette périphérique (5) qui positionne et stabilise le dispositif de dosage (1) à l'intérieur du col (18) du récipient (6), empêchant le dispositif de dosage (1) de s'enfoncer dans le récipient (6).

3. Dispositif de dosage (1) pour liquides conditionnés, selon la revendication 1, **caractérisé en ce qu'**il comprend un moyen de fixation du dispositif de dosage (1) et du col (18) du récipient (6) qui comprend un deuxième cylindre (14) concentrique au cylindre (2) présentant un filetage tel qu'il est possible de visser le dispositif de dosage (1) sur un filetage prévu dans le col (18) du récipient (6).

4. Dispositif de dosage (1) pour liquides conditionnés, selon les revendications 1 et 2, **caractérisé en ce qu'**un moyen de fixation repose sur une fente périphérique (30) ou un épaulement à l'intérieur du col (18) du récipient récepteur (6) qui reçoit et fixe l'ailette (5) du cylindre (2) de manière affleurante.

5. Dispositif de dosage (1) pour liquides conditionnés selon la revendication 3, **caractérisé en ce qu'**il comprend, en tant que moyen de fermeture de la première embouchure du récipient (15), le deuxième cylindre fileté (14) concentrique au cylindre droit (2) et un bouchon à vis (20).

6. Dispositif de dosage (1) pour liquides conditionnés selon la revendication 1, **caractérisé en ce qu'**il comprend, en tant que moyen de fermeture de la première embouchure du récipient (15), un couvercle (t) fixé à la périphérie de son embouchure supérieure (3) pourvu d'une première charnière (22) faite de la même matière plastique.

7. Dispositif de dosage (1) pour liquides conditionnés selon l'une quelconque des revendications précédentes, **caractérisé en ce qu'**il est fait d'un matériau malléable tel que le caoutchouc ou le latex et présente le côté le plus long (8) du dispositif (1) avec la même intersection et obliquité essentielle prévues, de même que celle du côté court opposé (9), et la base (17) du réservoir (1bis) est configurée avec un volume transversal pliable qui, une fois introduit, reprend sa forme initiale pour pouvoir dimensionner la dose prédéfinie.

8. Dispositif de dosage (1) pour liquides conditionnés selon l'une quelconque des revendications précédentes, **caractérisé en ce qu'**il comprend à l'intérieur un segment flexible (Sg-b) qui contient une surface (4bis) qui fait office de couvercle de fermeture pour le trou traversant (4), le segment (Sg-b) agissant en fermant ledit trou traversant (4) lorsque l'embouchure supérieure (3) n'est pas fermée et ouvre le trou (4) lorsqu'un couvercle ou un bouchon du récipient (6) presse ledit segment (Sg-b) lorsqu'il exerce sa fonction de fermeture du récipient (6).

9. Dispositif de dosage (1) pour liquides conditionnés selon la revendication 8, **caractérisé en ce que** ledit segment (Sg) présente une extrémité distale supérieure (d) qui est pressée par une extension interne (PR) du couvercle ou du bouchon, produisant l'ouverture du trou (4).

10. Dispositif de dosage (1) pour liquides conditionnés selon la revendication 8, **caractérisé en ce que** l'intérieur du réservoir (1bis) inclut un ou deux guides longitudinaux (G) qui guident la surface (4bis) vers la fermeture du trou traversant (4).

11. Dispositif de dosage (1) pour liquides conditionnés selon la revendication 6, **caractérisé en ce qu'**il comprend ledit couvercle (t) avec une deuxième charnière (B) qui ferme l'embouchure supérieure (3) et qui contient, à son tour, une deuxième embouchure (3bis) et un segment (Sg) articulé par une troisième charnière (22bis) à l'extrémité distante de laquelle se trouve une deuxième fermeture mobile (tbis) pour fermer ladite deuxième embouchure (3bis) qui ferme le passage du liquide contenu dans le dispositif (1), lorsque le dispositif de dosage (1) ou le récipient (6) ne présente pas sa première embouchure (15) ou son embouchure supérieure (3) fermée respectivement.

12. Dispositif de dosage (1) pour liquides conditionnés selon l'une quelconque des revendications précédentes, **caractérisé en ce qu'**il présente un rétrécissement de l'embouchure supérieure (3) sur le côté de versement.

13. Dispositif de dosage (1) pour liquides conditionnés selon l'une quelconque des revendications précédentes, **caractérisé en ce que** le trou traversant (4) est formé par une cloison intérieure (Dv) pour empêcher et rendre difficile la détérioration de la dose en cours d'utilisation en raison de l'arrivée de liquide provenant du récipient.
